(19) Europäisches Patentamt
European Patent Office
Office européen des brevets

(11) **EP 1 643 443 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(51) Int Cl.:
*G06T 7/00* *(2006.01)*  *G06T 3/00* *(2006.01)*

(21) Anmeldenummer: **04023325.6**

(22) Anmeldetag: **30.09.2004**

(54) **Verfahren und Vorrichtung zur Erzeugung eines CT-Datensatzes**

Method and apparatus for generating a CT dataset

Procédé et appareil de création d'un ensemble de données tomographiques par ordinateur

(84) Benannte Vertragsstaaten:
**DE FR GB IT**

(43) Veröffentlichungstag der Anmeldung:
**05.04.2006 Patentblatt 2006/14**

(73) Patentinhaber: **BrainLAB AG**
**85551 Kirchheim/Heimstetten (DE)**

(72) Erfinder:
• **Vilsmeier, Stefan**
**6330 Kufstein (AT)**
• **Schaffrath, Claus, Dr. med.**
**81377 München (DE)**
• **Feilkas, Thomas**
**85567 Grafing (DE)**

(74) Vertreter: **Schwabe - Sandmair - Marx**
**Stuntzstrasse 16**
**81677 München (DE)**

(56) Entgegenhaltungen:
EP-A- 1 348 394  WO-A-00/36565
DE-A1- 10 144 630

• KOVACIC S ET AL: "Three-dimensional registration of PET and CT images" ENGINEERING IN MEDICINE AND BIOLOGY SOCIETY, PROCEEDINGS 11TH ANNUAL CONFERENCE OF THE IEEE, 1989, 9. November 1989 (1989-11-09), Seiten 548-549, XP010088930

• LAVALLEE S ET AL: "Matching Of Medical Images For Computed And Robot Assisted Surgery" ENGINEERING IN MEDICINE AND BIOLOGY SOCIETY, 1991. VOL.13: 1991., PROCEEDINGS OF THE ANNUAL INTERNATIONAL CONFERENCE OF THE IEEE ORLANDO, FL, USA 31 OCT.-3 NOV. 1991, NEW YORK, NY, USA,IEEE, US, 31. Oktober 1991 (1991-10-31), Seiten 39-40, XP010101564 ISBN: 0-7803-0216-8

• FOOKES C ET AL INSTITUTE OF ELECTRICAL AND ELECTRONICS ENGINEERS: "The use of mutual information for rigid medical image registration: a review" IEEE 2002 INTERNATIONAL CONFERENCE ON SYSTEMS, MAN AND CYBERNETICS. (SMC'02). YASMINE HAMMAMET, TUNESIA, OCT. 6 - 9, 2002, IEEE INTERNATIONAL CONFERENCE ON SYSTEMS, MAN, AND CYBERNETICS, NEW YORK, NY : IEEE, US, Bd. VOL. 7 OF 7, 6. Oktober 2002 (2002-10-06), Seiten 689-694, XP010623558 ISBN: 0-7803-7437-1

• SORLIE C ET AL: "MATCHING OF GIGITISED BRAIN ATLAS TO MAGNETIC RESONANCE IMAGES" MEDICAL AND BIOLOGICAL ENGINEERING AND COMPUTING, PETER PEREGRINUS LTD. STEVENAGE, GB, Bd. 35, Nr. 3, Mai 1997 (1997-05), Seiten 239-245, XP000677432 ISSN: 0140-0118

• VAILLANT M ET AL: "Hierarchical matching of cortical features for deformable brain image registration" INFORMATION PROCESSING IN MEDICAL IMAGING. 16TH INTERNATIONAL CONFERENCE, IPMI'99. PROCEEDINGS (LECTURE NOTES IN COMPUTER SCIENCE VOL. 1613) SPRINGER-VERLAG BERLIN, GERMANY, 1999, Seiten 182-195, XP002318431 ISBN: 3-540-66167-0

EP 1 643 443 B1

**Beschreibung**

Die vorliegende Erfindung bezieht sich auf ein Verfahren und eine Vorrichtung zur Erzeugung eines Computertomographie(CT)-Datensatzes eines Objektes, insbesondere eines virtuellen, also nicht durch eine CT-Aufnahme erstellten, CT-Datensatzes einer Körperstruktur, wie zum Beispiel des Kopfes, der Hüfte oder der Wirbelsäule.

Bei der Untersuchung eines Patienten oder zur Vorbereitung eines chirurgischen Eingriffes, insbesondere bei chirurgischen Eingriffen im Bereich von Knochen, wie zum Beispiel bei einer Wirbelsäulen-, Hüftgelenks- oder Knieoperation, werden Computertomographieaufnahmen der betroffenen Körperstruktur gemacht, mit welchen Knochenstrukturen gut dargestellt werden können, wobei Röntgenstrahlen verwendet werden, welche eine gesundheitliche Belastung darstellen.

Kernspintomographieaufnahmen (MRI), welche ohne gesundheitliche Belastung für einen Patienten erstellt werden können, eignen sich zwar zur Darstellung von weichem Gewebe, jedoch können Knochenstrukturen bei MR-Aufnahmen im Allgemeinen nur schlecht oder gar nicht erkannt werden.

Es ist eine Aufgabe der vorliegenden Erfindung ein Verfahren und eine Vorrichtung vorzuschlagen, welche die Erzeugung eines Datensatzes zur Bestimmung der Knochenstruktur, insbesondere die Erzeugung eines virtuellen Computertomographie-Datensatzes, im Wesentlichen ohne gesundheitliche Beeinträchtigung für einen Patienten ermöglichen.

Diese Aufgabe wird durch die Gegenstände der unabhängigen Ansprüche gelöst. Vorteilhafte Ausführungsformen ergeben sich aus den Unteransprüchen.

Bei dem erfindungsgemäßen Verfahren zur Erzeugung eines Datensatzes zum Auffinden einer Knochenstruktur, insbesondere zur Erzeugung eines dreidimensionalen Computertomographie-Datensatzes oder einer dreidimensionalen Abbildung oder Darstellung der Knochenstruktur, welche in dem Körper eines Patienten vorhanden ist, wird zunächst auf bekannte Art eine Kernspinresonanzaufnahme (MRI) der zu untersuchenden Struktur, wie zum Beispiel einer Hüfte, durchgeführt. Weiterhin wird ein generischer oder MRI-Referenzdatensatz $MR_R$ für den aufgenommenen Körperteil oder die aufgenommene Körperstruktur, wie zum Beispiel eine MR-Aufnahme einer Referenz-Hüfte, zusammen mit einem generischen oder Computertomographie-Referenzdatensatz $CT_R$ dieser Körperstruktur, also der Referenz-Hüfte, verwendet, wobei solche Referenzdatensätze bereits vor der erfindungsgemäßen MR-Aufnahme zum Beispiel in einer Datenbank abgespeichert sein können und ein bekanntes Lageverhältnis zueinander haben, also fusioniert sind. Es existieren für alle Körper- oder Knochenstrukturen bereits solche Referenzdatensätze, welche zum Beispiel in einer Datenbank abgelegt sein können. Erfindungsgemäß wird eine Transformation oder eine Abbildungsvorschrift mit einem im Stand der Technik bekannten Algorithmus, wie zum Beispiel in M. Vaillant und C. Davatzikos "Hierarchical Matching of Cortical Features for Deformable Brain Image Registration", IP-MI'99, Volume 1613, p. 182-195, June 1999, J.C. Gee and M. Reivich and R. Bajcsy. "Elastically Deforming 3D Atlas to Match Anatomical Brain Imges", J. Comp. Assist. Tomogr., volume 17, p. 225-236, 1993 oder der DE 101 44 630 A1 der Anmelderin beschrieben, ermittelt, also ein Morphing-Verfahren durchgeführt, so dass mittels der gesuchten Abbildungsvorschrift f der Kernspintomographie-Referenzdatensatz $MR_R$ auf den aufgenommenen Kernspintomographie-Datensatz MR abgebildet werden kann, so dass gilt:

$$f\,(MR_R) = MR$$

f ist dabei eine Funktion oder Abbildungsvorschrift eines dreidimensionalen Raumes und beschreibt wie der Kernspintomographie-Referenzdatensatz $MR_R$ verformt werden muss, um den durch Aufnahme der betreffenden Körperstruktur erhaltenen Kernspintomographie-Datensatz MR zu erhalten. Die so ermittelte Abbildungsvorschrift f wird erfindungsgemäß auf den Computertomographie-Referenzdatensatz $CT_R$ angewandt, welcher dem Kernspintomographie-Referenzdatensatz $MR_R$ zugeordnet ist, um erfindungsgemäß einen dreidimensionalen virtuellen Computertomographie-Datensatz $CT^*$ zu erhalten, welcher zum Beispiel die Knochenstruktur des Objektes beschreiben kann, von welchem lediglich ohne Strahlenbelastung eine Kernspinresonanz-Aufnahme MR erstellt wurde. Das Berechnen des erfindungsgemäß ermittelten Computertomographie-Datensatzes $CT^*$ kann formelmäßig beschrieben werden durch:

$$CT^* = f(CT_R)$$

wobei die zur Transformation des Computertomographie-Referenzdatensatzes $CT_R$ verwendete und eine Transformation im dreidimensionalen Raum beschreibende Funktion f die oben beschriebene Transformation oder Funktion ist, mit welcher der Kernspintomographie-Referenzdatensatz $MR_R$ auf den aufgenommenen Kernspintomographie-Datensatz MR abgebildet werden kann. Erfindungsgemäß kann ein "virtueller" Computertomographie-Datensatz $CT^*$ ohne Durchführung einer Computertomographie-Aufnahme erzeugt werden.

Somit ermöglicht das erfindungsgemäße Verfahren, dass bei einem Patienten nur eine Computertomographie-Aufnahme (MRI) ohne Strahlenbelastung durchgeführt wird, wobei erfindungsgemäß sowohl der errechnete Computertomographie-Datensatz $CT^*$ zur Beschreibung von Knochenstrukturen, als auch die im aufgenommenen Kernspintomographie-Datensatz MR enthaltenen Informationen zur Lage und Struktur von weichem Gewebe zur Verfügung stehen, so dass auch eine Kombination dieser Datensätze durch Fusion erzeugt werden kann, um zum Beispiel in einem einzigen Datensatz Informationen bezüglich der Knochenstruktur und bezüglich weichem Gewebe zum Beispiel zur Untersuchung eines Patienten oder zur Planung eines chirurgischen Eingriffes zur Verfügung zu haben.

Vorzugsweise wird ein Computertomographie-Referenzdatensatz $CT_R$ und/oder ein Kernspinresonanz-Referenzdatensatz $MR_R$ verwendet, welcher schon segmentiert und gelabelt ist, das heißt es ist für den betreffenden Referenzdatensatz bekannt, wo die einzelnen Körperstrukturen, wie zum Beispiel Knochengewebe oder weiches Gewebe, begrenzt sind und welche Art eines Gewebes vorliegt. Nach der Bestimmung der Transformations- oder Abbildungsfunktion f kann diese Information von einem Referenz-Datensatz auch auf den durch Aufnahme zum Beispiel eines Körperteils erhaltenen Kernspinresonanz-Datensatz MR oder den erfindungsgemäß ermittelten virtuellen Computertomographie-Datensatz $CT^*$ übertragen werden.

Zur Registrierung des aufgenommenen Körperteils kann zum Beispiel ein bekanntes Fluoro-Matching durchgeführt werden, wobei als DRR (Digital Reconstructed Radiograph) Darstellung der erfindungsgemäß erstellte virtuelle Computertomographie-Datensatz $CT^*$ verwendet wird. Es ist somit möglich, zum Beispiel auch intra-operativ ein sogenanntes MR-zu-Fluoro-Matching durchzuführen, wobei ein 3D-Datensatz mit einer oder mehreren 2D-Röntgenaufnahmen registriert wird, wie zum Beispiel in der US 4,791,934 beschrieben. Ebenso kann der CT-Datensatz mit anderen Methoden, wie zum Beispiel Paired-Point Matching oder ähnlichen featurebasierten Algorithmen registriert werden.

Sind die Parameter bei der Computertomographie-Aufnahme MR eines Patienten bzw. einer Körperstruktur anders als die bei der Referenz-Kernspinresonanzaufnahme $MR_R$ verwendeten Parameter, so kann eine Abbildungsvorschrift oder Funktion ermittelt oder angegeben werden, um aus einer der beiden Kernspinresonanz-Aufnahmen einen Datensatz zu erstellen, welcher mit der anderen Kernspinresonanz-Aufnahme verglichen werden kann, um die Abbildungs- oder Transformationsvorschrift f $(MR_R)$ = MR zu ermitteln.

Weiterhin bezieht sich die Erfindung auf ein Navigationsverfahren, wobei zum Navigieren zum Beispiel eines Objekts oder Instruments mit einem bekannten Navigationssystem ein erfindungsgemäß ermittelter virtueller Computertomographie-Datensatz CT* verwendet wird.

Die Erfindung bezieht sich auch auf ein Computerprogramm, welches, wenn es in einen Computer geladen wird oder ist oder auf einem Computer läuft ein wie oben beschriebenes Verfahren ausführt, sowie auf ein Programmspeichermedium oder Computerprogrammprodukt mit einem solchen Computerprogramm.

Gemäß einem weiteren Aspekt bezieht sich die Erfindung auf eine Vorrichtung zur Erzeugung eines Computertomographie-Datensatzes $CT^*$ mit einem Kernspintomographen zur Erzeugung einer Kernspintomographie-Aufnahme MR eines Körpers oder einer Körperstruktur, einer Datenbank, in welcher ein Kernspintomographie-Referenzdatensatz $MR_R$ und ein dem Kernspintomographie-Referenzdatensatz $MR_R$ zugeordneter Computertomographie-Referenzdatensatz $CT_R$ gespeichert sind und einer Recheneinheit, mit welcher eine Abbildungsvorschrift f $(MR_R)$ ermittelt oder berechnet werden kann, mit welcher der Kernspintomographie-Referenzdatensatz $MR_R$ auf den aufgenommenen Kernspintomographie-Datensatz MR abgebildet wird, so dass ein virtueller Computertomographie-Datensatz $CT^*$ durch Transformation des dem Kernspintomographie-Referenzdatensatz $MR_R$ entsprechenden Computertomographie-Referenzdatensatzes $CT_R$ durch $CT^*=f(CT_R)$ ermittelt werden kann.

Vorzugsweise ist die erfindungsgemäße Vorrichtung mit einer Ausgabe- oder Anzeigeeinheit, wie zum Beispiel einem Bildschirm, gekoppelt, an welchem der aufgenommene Kernspinresonanz-Datensatz MR und der erfindungsgemäß berechnete virtuelle Computertomographie-Datensatz CT* dargestellt werden kann.

Bevorzugt ist die erfindungsgemäße Vorrichtung mit einem Navigationssystem verbunden, wobei die mittels eines Kernspintomographie-Verfahrens aufgenommene Körperstruktur registriert werden kann und ein bekanntes Navigationsverfahren durchgeführt werden kann.

Die Erfindung wird nachfolgend anhand eines bevorzugten Ausführungsbeispieles beschrieben. Es zeigen:

Figur 1 eine schematische Darstellung einer erfindungsgemäßen Vorrichtung; und

Figur 2 eine schematische Darstellung des erfindungsgemäßen Verfahrens an- hand einer Aufnahme eines Kopfes in einer vorgegebenen Ebene.

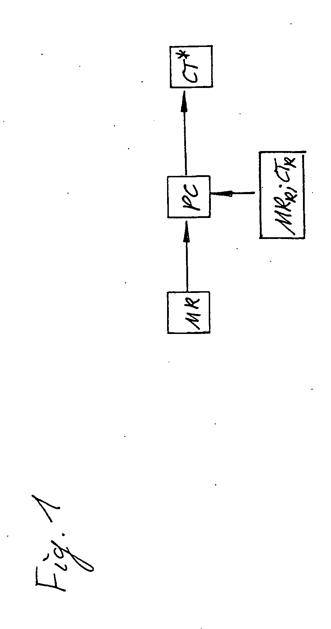

Figur 1 zeigt einen Kernspintomographen MR, mit welchem ein Körper oder eine Körperstruktur eines Patienten aufgenommen wird. Die vom Kernspintomographen MR aufgenommenen eine dreidimensionale Struktur des Körpers beschreibenden Daten werden an eine Recheneinheit PC weitergegeben. Die Recheneinheit PC ist mit einer Datenbank verbunden, in welcher ein Kernspintomographie-Referenzdatensatz $MR_R$ und ein segmentierter und gelabelter Computertomographie-Referenzdatensatz $CT_R$ gespeichert sind. Mit dem oben beschriebenen erfindungsgemäßen Verfahren wird aus den Datensätzen MR, $MR_R$ und $CT_R$ der virtuelle Computertomographie-Datensatz $CT^*$ ermittelt, welcher mit dem aufgenommenen Computertomographie-Datensatz MR fusioniert und als Basis für ein Navigationsverfahren verwendet werden kann.

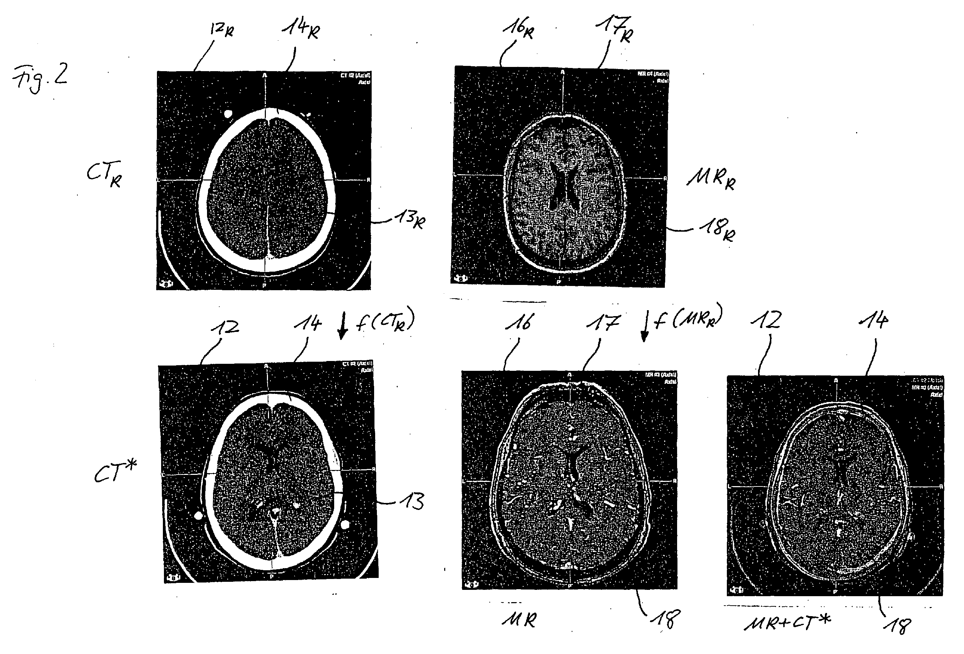

Figur 2 zeigt einen aufgenommenen Kernspinresonanz-Datensatz MR am Beispiel einer Schnittebene eines Kopfes eines Patienten, wobei der mit 16 bezeichnete schwarze Bereich der Luft um den Kopf herum entspricht. Innerhalb des Kopfes entsprechen die schwarzen Bereiche 17 dem Knochengewebe oder anderen Elementen, wie zum Beispiel Luft. Die grau dargestellten Bereiche 18 stellen weiches Gewebes, wie zum Beispiel das Gehirn, dar. Das zum Beispiel in einer Datenbank gespeicherte Referenzbild oder der Kernspinresonanz-Referenzdatensatz $MR_R$ zeigt ebenfalls die den Bereichen 16, 17 und 18 entsprechenden Referenz-Bereiche $16_R$, $17_R$ und $18_R$, wobei jedoch die Struktur oder Form der jeweiligen Bereiche in dem Referenzdatensatz $MR_R$ von dem aufgenommenen Datensatz MR verschieden sein können. Mit einem bekannten Verfahren wird eine Transformations- oder Abbildungsvorschrift f ermittelt, mit welcher der Referenzdatensatz $MR_R$ durch die Abbildung f ($MR_R$) = MR auf den aufgenommenen Datensatz MR abgebildet werden kann.

Der in Figur 2 gezeigte Computertomographie-Referenzdatensatz $CT_R$ ist eine Aufnahme der gleichen Schnittebene des für den Referenzdatensatz $MR_R$ verwendete Referenzkopfes und entspricht somit der Schnittebene des Computertomographie-Referenzdatensatzes $MR_R$ und ist segmentiert und gelabelt, das heißt, es ist bekannt, wie zum Beispiel die Knochenstrukturen im Referenzdatensatz verlaufen und voneinander abgegrenzt sind.

Der außerhalb des Kopfes gezeigte schwarze Bereich $12_R$ bezeichnet die um den Kopf herum vorhandene Luft. Der weiße Bereiche $14_R$ entspricht dem Knochengewebe und der graue Bereich $13_R$ entspricht dem weichem Gewebe, wobei im Computertomographie-Referenzdatensatz $CT_R$ anders als im Kernspinresonanz-Referenzdatensatz $MR_R$ eine klare Abgrenzung des Knochengewebes $14_R$ und dessen Struktur enthalten ist.

Die oben beschriebene Transformations- oder Abbildungsfunktion f wird verwendet, um den Computertomographie-Referenzdatensatz $CT_R$ in den virtuellen Computertomographie-Datensatz CT* durch die Abbildung f ($CT_R$) = CT* zu transformieren, so dass ein Computertomographie-Datensatz erhalten werden kann, welcher einer Computertomographie-Aufnahme eines Körpers oder Objektes entspricht, von dem erfindungsgemäß nur eine Kernspinresonanz-Aufnahme MR erzeugt wurde.

Der Kernspinresonanz-Datensatz MR und der virtuelle Computertomographie-Datensatz CT* können zu einem gemeinsamen Datensatz MR + CT* fusioniert werden, wie in Figur 2 gezeigt, so dass in dem fusionierten Datensatz gleichzeitig detaillierte Strukturinformationen des weichen und harten bzw. Knochengewebes enthalten sind.

**Patentansprüche**

1. Verfahren zur Erzeugung eines Computertomographie-Datensatzes (CT*) eines Objektes, wobei eine Kernspintomographie-Aufnahme (MR) des Objektes durchgeführt wird, eine Transformations- oder Abbildungsvorschrift (f ($MR_R$)) zu einem Kernspintomographie-Referenzdatensatz ($MR_R$) ermittelt wird, mit welcher der Kernspintomographie-Referenzdatensatz ($MR_R$) auf den aufgenommenen Kernspintomographie-Datensatz (MR) abgebildet wird und wobei die ermittelte Transformations- oder Abbildungsvorschrift (f) auf einen dem Kernspintomographie-Referenzdatensatz ($MR_R$) korrespondierenden Computertomographie-Referenzdatensatz ($CT_R$) angewandt wird, um einen virtuellen Computertomographie-Datensatz (CT* = f ($CT_R$)) zu bestimmen.

2. Verfahren nach Anspruch 1, wobei eine Fusion des aufgenommenen Kernspinresonanz-Datensatzes (MR) und des virtuellen Computertomographie-Datensatzes (CT*) durchgeführt wird.

3. Verfahren nach einem der vorhergehenden Ansprüche, wobei ein segmentierter und/oder gelabelter Kernspinresonanz-Referenzdatensatz ($MR_R$) und/oder Computertomographie-Referenzdatensatz ($CT_R$) verwendet wird.

4. Verfahren nach einem der vorhergehenden Ansprüche, wobei eine Registrierung des aufgenommenen Objektes mit einem Fluoro-zu-CT-Matching unter Verwendung des virtuellen Computertomographie-Datensatzes (CT*) durchgeführt wird.

5. Verfahren nach einem der vorhergehenden Ansprüche, wobei eine Umrechnungsvorschrift verwendet wird, um den Kernspinresonanz-Referenzdatensatz ($MR_R$) und/oder den aufgenommenen Kernspintomographie-Datensatz (MR) so umzurechnen, dass der aufgenommene Kernspinresonanz-Datensatz (MR) und der Kernspintomographie-Referenzdatensatz ($MR_R$) vergleichbar sind, wenn bei der Erzeugung der Kernspinresonanz-Datensätze unterschiedliche Parameter verwendet wurden.

6. Verfahren zur Navigation eines Objektes oder Körpers, wobei ein nach einem der vorhergehenden Verfahren ermittelter virtueller Computertomographie-Datensatz (CT*) zum Navigieren verwendet wird.

7. Computerprogramm welches, wenn es in einen Computer geladen wird oder ist oder auf einem Computer läuft, ein Verfahren nach einem der vorhergehenden Ansprüche ausführt.

8. Programmspeichermedium oder Computerprogrammprodukt mit dem Programm nach dem vorhergehenden Anspruch.

**9.** Vorrichtung zur Erzeugung eines Computertomographie-Datensatzes (CT*) mit einem Kernspintomographen zur Erzeugung einer Kernspintomographie-Aufnahme (MR) eines Körpers oder einer Körperstruktur, einer Datenbank, in welcher ein Kernspintomographie-Referenzdatensatz ($MR_R$) und ein dem Kernspintomographie-Referenzdatensatz ($MR_R$) zugeordneten Computertomographie-Referenzdatensatz ($CT_R$) gespeichert sind und einer Recheneinheit, mit welcher eine Transformations- oder Abbildungsvorschrift (f ($MR_R$)) ermittelt oder berechnet wird, mit welcher der Kernspintomographie-Referenzdatensatz ($MR_R$) auf den aufgenommenen Kernspintomographie-Datensatz (MR) abgebildet wird, so dass ein virtueller Computertomographie-Datensatz (CT*) durch Transformation des dem Kernspintomographie-Referenzdatensatz ($MR_R$) entsprechenden Computertomographie-Referenzdatensatzes ($CT_R$) mit der ermittelten Abbildungsvorschrift (f) berechnet wird.

**10.** Vorrichtung nach dem vorhergehenden Anspruch mit einer Anzeige- oder Ausgabeeinheit zur Darstellung des virtuellen Computertomographie-Datensatzes (CT*) und/oder des aufgenommenen Kernspinresonanz-Datensatzes (MR).

**11.** Vorrichtung nach einem der beiden vorhergehenden Ansprüche mit einem Navigationssystem zum Navigieren eines Objektes, Körpers oder Instrumentes.

**Claims**

**1.** A method for generating a computer tomography data set (CT*) of an object, wherein: a nuclear spin tomography recording (MR) of the object is taken; a transformation or mapping protocol (f ($MR_R$)) for a nuclear spin tomography reference data set ($MR_R$) is ascertained, using which the nuclear spin tomography reference data set ($MR_R$) is mapped onto the recorded nuclear spin tomography data set (MR); and wherein the ascertained transformation or mapping protocol (f) is applied to a computer tomography reference data set ($CT_R$) corresponding to the nuclear spin tomography reference data set ($MR_R$), in order to determine a virtual computer tomography data set (CT* = f ($CT_R$)).

**2.** The method according to claim 1, wherein the recorded nuclear spin resonance data set (MR) and the virtual computer tomography data set (CT*) are fused.

**3.** The method according to any one of the preceding claims, wherein a segmented and/or labelled nuclear spin resonance reference data set ($MR_R$) and/or computer tomography reference data set ($CT_R$) is used.

**4.** The method according to any one of the preceding claims, wherein the recorded object is registered by fluoro-to-CT matching, using the virtual computer tomography data set (CT*).

**5.** The method according to any one of the preceding claims, wherein a conversion protocol is used to convert the nuclear spin resonance reference data set ($MR_R$) and/or the recorded nuclear spin tomography data set (MR) such that the recorded nuclear spin resonance data set (MR) and the nuclear spin tomography reference data set ($MR_R$) can be compared, if different parameters have been used to generate the nuclear spin resonance data sets.

**6.** A method for navigating an object or body, wherein a virtual computer tomography data set (CT*), ascertained according to any one of the preceding methods, is used for navigating.

**7.** A computer program which, when it is loaded onto a computer or is running on a computer, performs a method according to any one of the preceding claims.

**8.** A program storage medium or computer program product comprising the program according to the preceding claim.

**9.** A device for generating a computer tomography data set (CT*), comprising: a nuclear spin tomograph for generating a nuclear spin tomography recording (MR) of a body or body structure; a database in which a nuclear spin tomography reference data set ($MR_R$) and a computer tomography reference data set ($CT_R$) which is assigned to the nuclear spin tomography reference data set ($MR_R$) are stored; and a computational unit using which a transformation or mapping protocol (f ($MR_R$)) is ascertained or calculated, using which the nuclear spin tomography reference data set ($MR_R$) is mapped onto the recorded nuclear spin tomography data set (MR), such that a virtual computer tomography data set (CT*) is calculated by transforming the computer tomography reference data set ($CT_R$) corresponding to the nuclear spin tomography reference data set ($MR_R$) using the ascertained mapping protocol (f).

**10.** The device according to the preceding claim, comprising a display or output unit for displaying the virtual computer tomography data set (CT*) and/or the recorded nuclear spin resonance data set (MR).

**11.** The device according to any one of the preceding two claims, comprising a navigation system for navigating an object, body or instrument.

**Revendications**

1. Procédé pour produire un ensemble de données tomographiques par ordinateur (CT\*) d'un objet, dans lequel on réalise une image tomographique par résonance magnétique (MR) de l'objet, on détermine une règle de transformation ou de reproduction (f($MR_R$)) pour un ensemble de données de référence tomographiques par résonance magnétique ($MR_R$) par laquelle l'ensemble de données de référence tomographiques par résonance magnétique ($MR_R$) est reproduit sur l'ensemble de données tomographiques par résonance magnétique relevé, et dans lequel on applique la règle de transformation ou de reproduction (f) déterminée à un ensemble de données de référence tomographiques par ordinateur ($CT_R$) correspondant à l'ensemble de données de référence tomographiques par résonance magnétique ($MR_R$), afin de définir un ensemble virtuel de données tomographiques par ordinateur (CT\* = f($CT_R$)).

2. Procédé selon la revendication 1, dans lequel on procède à une fusion de l'ensemble de données de résonance magnétique (MR) relevé et de l'ensemble virtuel de données tomographiques par ordinateur (CT\*).

3. Procédé selon l'une des revendications précédentes, dans lequel on utilise un ensemble de données de référence de résonance magnétique ($MR_R$) segmenté et/ou étiqueté et/ou un ensemble de données de référence tomographiques par ordinateur ($CT_R$) .

4. Procédé selon l'une des revendications précédentes, dans lequel on procède à un enregistrement de l'objet relevé avec une comparaison fluor-CT par utilisation de l'ensemble virtuel de données tomographiques par ordinateur (CT\*).

5. Procédé selon l'une des revendications précédentes, dans lequel on utilise une règle de conversion pour convertir l'ensemble de données de référence de résonance magnétique ($MR_R$) et/ou l'ensemble de données tomographiques par résonance magnétique (MR) relevé, de manière que l'ensemble de données de résonance magnétique (MR) relevé et l'ensemble de données de référence tomographiques par résonance magnétique ($MR_R$) soient comparables lorsque des paramètres différents ont été utilisés lors de la production des ensembles de données de résonance magnétique.

6. Procédé de navigation d'un objet ou d'un corps, dans lequel on utilise pour naviguer un ensemble virtuel de données tomographiques par ordinateur (CT\*) déterminé selon l'un des procédés précédents.

7. Programme d'ordinateur qui, lorsqu'il est chargé dans un ordinateur ou tourne sur un ordinateur, exécute un procédé selon l'une des revendications précédentes.

8. Support de mémoire de programme ou produit de programme d'ordinateur avec le programme selon la revendication précédente.

9. Dispositif pour produire un ensemble de données tomographiques par ordinateur (CT\*) comportant un tomographe à résonance magnétique pour réaliser une image tomographique par résonance magnétique (MR) d'un corps ou d'une structure corporelle, une banque de données dans laquelle sont mémorisés un ensemble de données de référence tomographiques par résonance magnétique ($MR_R$) et un ensemble de données de référence tomographiques par ordinateur ($CT_R$) associé à l'ensemble de données de référence tomographiques par résonance magnétique ($MR_R$), ainsi qu'une unité informatique avec laquelle on détermine ou calcule une règle de transformation ou de reproduction (f($MR_R$)) avec laquelle l'ensemble de données de référence tomographiques par résonance magnétique ($MR_R$) est reproduit sur l'ensemble de données tomographiques par résonance magnétique (MR) relevé, de manière à calculer un ensemble virtuel de données tomographiques par ordinateur (CT\*) par transformation de l'ensemble de données de référence tomographiques par ordinateur ($CT_R$) correspondant à l'ensemble de données de référence tomographiques par résonance magnétique ($MR_R$), avec la règle de reproduction (f) déterminée.

10. Dispositif selon la revendication précédente avec une unité d'affichage ou d'édition pour représenter l'ensemble virtuel de données tomographiques par ordinateur (CT\*) et/ou l'ensemble de données de résonance magnétique (MR) relevé.

11. Dispositif selon l'une des deux revendications précédentes avec un système de navigation pour la navigation d'un objet, d'un corps ou d'un instrument.

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10144630 A1

- US 4791934 A

**In der Beschreibung aufgeführte Nicht-Patentliteratur**

- **M. VAILLANT ; C. DAVATZIKOS.** Hierarchical Matching of Cortical Features for Deformable Brain Image Registration. *IP-MI'99,* Juni 1999, vol. 1613, 182-195

- **J.C. GEE ; M. REIVICH ; R. BAJCSY.** Elastically Deforming 3D Atlas to Match Anatomical Brain Imges. *J. Comp. Assist. Tomogr.,* 1993, vol. 17, 225-236